# EUROPEAN PATENT SPECIFICATION

(11) **EP 3 363 519 B1**
(45) Date of publication and mention of the grant of the patent: **19.01.2022**
(21) Application number: 17156979.1
(22) Date of filing: 20.02.2017
(51) Int. Cl.: B01D 45/08, F24C 15/20

(54) **FILTER FOR A KITCHEN HOOD**
FILTER FÜR EINE KÜCHENABZUGSHAUBE
FILTRE POUR UNE HOTTE DE CUISINE

(43) Date of publication of application: 22.08.2018
(73) Proprietor: Electrolux Appliances Aktiebolag, 105 45 Stockholm (SE)
(72) Inventor: RAUS, Dragan, 33080 Porcia (IT); SPIZZO, Fabio, 33080 Porcia (IT); DE BIAGI, Angelo, 47100 Forli (IT); CTVRTNIK, Jan, 88447 Warthausen (DE)
(74) Representative: Electrolux Group Patents

(56) References cited:
- EP-A1- 2 287 534
- DE-U1- 9 005 858
- ES-A1- 2 277 701
- FR-A1- 2 677 269
- US-A- 1 059 910
- US-A- 3 834 135
- US-A- 4 830 644
- US-A1- 2007 163 216
- US-A1- 2008 202 083

## Description

The present invention relates to a filter for a kitchen hood comprising at least one at least one filter element and a kitchen hood comprising such filter and/or such at least one filter element.

Extractor hoods, particularly kitchen hoods usually comprise a filter for eliminating fat or particles, such as water, and/or odour from the indrawn air, e.g. cooking vapours. Moreover, intake filters, particularly in oven hoods, are arranged towards the oven/kitchen and designed to absorb grease in the cooking vapours to protect the fan(s) and electronics inside the hood.

There are filters manufactured from textile. However, the flow path through the textile filter is short related its thickness. After an intense cooking with oil or fat such filters are clogged fast followed by air flow reduction through. Further, there are filters made of metal wires. However, the metal filter is expensive. If the organic material fibres are used for the textile filter, then the filter show a low valued solution.

More advanced filters, such as grease or fat filters for cooker hoods are usually either manufactured from a stainless steel or aluminium frame provided with an aluminium mesh, or a stainlesssteel baffle filter forming a labyrinth.

Such labyrinth filters are integrated in the hood, wherein several layers of metal are provided and arranged such that the air is drawn in through openings within or between the metal layers and the change of direction provoked by the arrangement of the metal layers building the labyrinth, causes particles, and particularly fat particles, to be filtered out of the indrawn air by accumulation on the surface of the metal layers.

The document EP 1 481 200 B1 describes a filter arrangement for a fume extractor hood for separation of particles and/or liquid droplets from the air flowing through the filter arrangement. The filter arrangement comprises a filter layer and an edge filter, wherein the edge filter encloses the filter layer. The edge filter is a cyclone separator and has a lower flow resistance than the filter layer. The edge filter is arranged perpendicular to the plane of the filter layer that liquid droplets separated in the edge filter flow into the edge region of the filter layer and taken up there.

The document FR 2 677 269 A1 describes a filtering device having a number of components arranged side by side in an overlapping manner so as to create a cyclone effect, such that the profile of each component defines a cross-section having a number of separate chambers whose number and profile are determined so that the overlapping parts of two adjacent components are capable of forming a number of successive changes of sections to create at least three cyclone effects.

However, a drawback of usual applied filters and filter elements manufactured from metal, paper or synthetic fibres is their susceptibility and sensitivity to detergents, particularly alkaline detergents. Further, the filters and filter elements manufactured from metal fibres are very heavy and expensive.

It is an object of the present invention to provide a filter or filter element for a kitchen hood for separating particles, in particular fat particles, from cooking vapours, which reduces or eliminates the constraints of known filters or filter elements.

It is a further object of the present invention to provide a filter and/or filter element for a kitchen hood, which is more comfortable to handle, particularly with regard to assembly, disassembly and/or cleaning of said filter or filter element.

The above objects of the present invention are achieved by a filter according to claim 1.

According to the present invention a filter for a kitchen hood is provided, wherein
- said filter comprises a plurality of filter elements,
- the filter elements are formed as elongated profile parts,
- the filter elements are arranged side by side and parallel to each other,
- the shapes of opposite surfaces of two adjacent filter elements are substantially complementary to each other and have a wave-like structure,
- the opposite surfaces of the adjacent filter elements are spaced from each other at a predetermined distance, and
- an air flow channel is formed in each intermediate space between two adjacent filter elements, so that
- an air stream through said air flow channel extends perpendicular to the longitudinal axes of the filter elements.

The core of the present invention is the labyrinthine shape of the air flow channels in the intermediate spaces between the adjacent filter elements. Said labyrinthine shape catches the grease as the air stream passes through the air flow channel. The wave-like structure generates a vortex flow in the air flow channel by low complexity. By said vortex flow grease is separated from the air stream and deposited in sub-cavities of the wave-like structure. The filter elements have simple geometric structure and are producible by low costs.

Preferably, the filter elements formed as elongated profile parts have the same cross-section, wherein preferably said filter elements have a Z-shaped cross-section.

In particular, the wave front of the wave-like structure extends parallel to the longitudinal axes of the filter elements. Thus, the path of the air stream through the air flow channel takes a wave-like course.

Further, the filter elements may be made of at least one non-metal material, in particular a plastic material selected from the group comprising acrylonitrile butadiene styrene (ABS), polypropylene (PP), polycarbonate (PC), glass and glass ceramic plastics. Plastic is a light and cheap material and is producible in arbitrary colours. For example, the filter elements are extruded profile parts. Since plastic is light, the filter elements may be large.

Preferably, the filter elements are made of one or more materials having a heat resistance of more than about 105°C.

Moreover, the filter may comprise at least one frame enclosing the filter elements or a part of said filter elements, wherein preferably the frame has a rectangular or square shape.

The distance between the opposite surfaces of the adjacent filter elements is between 1 mm and 5 mm, preferably between 2 mm and 4 mm, in particular about 3 mm. These distances allow the sufficient separation of grease from the air stream on the one hand and a low flow resistance on the other hand. In turn, the low flow resistance allows a low-energy fan.

For example, the radius of curvature of the wave-like structure is between 5 mm and 20 mm, preferably between 7 mm and 15 mm, in particular about 12 mm.

In particular, the intermediate spaces between the adjacent filter elements are filled with at least one porous material, wherein preferably said porous material is foamed ceramics. The substantial part of the filter may be made of plastics and ceramics. The filter elements are made of plastics, while the intermediate space between them is foamed ceramics.

Further, the porous material may be coated with an adsorbent, wherein preferably said adsorbent is selected from the group comprising activated carbon.

Moreover, the filter may comprise at least one bar or screw for connecting the filter elements, wherein said bar or screw penetrates horizontally the filter elements to be connected, and wherein preferably said bar or screw extends perpendicular to the longitudinal axis of the filter elements.

Additionally, the filter may comprise a plurality of spacer elements arranged or arrangeable between two adjacent filter elements and penetrated by the bar or screw, respectively, in order to define the distances between the opposite surfaces of the adjacent filter elements, wherein preferably said bar or screw extends perpendicular to the longitudinal axis of the filter elements. The spacer elements guarantee the predetermined distances between the opposite surfaces of the adjacent filter elements.

Furthermore, the filter may comprise at least one filter dirty status indicator formed as a screw vertically insertable into and removable from the filter element, in particular the air flow channel, wherein said screw indicates the degree of contamination of the filter element.

Alternatively or additionally, the filter may comprise at least one filter dirty status indicator formed as a wire or needle horizontally insertable into and removable from the air flow channel between two filter elements, wherein said wire or needle indicates the degree of contamination of the filter element, and wherein preferably the wire or needle has a diameter between 4 mm and 6 mm, in particular 5 mm, and a length between 120 mm and 150 mm.

In the latter case, the wire or needle may include a number of equidistance holes extending perpendicular to the longitudinal axis of said wire or needle, wherein at least two holes extend perpendicular to each other, and wherein preferably the holes have the same diameter, which is between 1 mm and 2 mm, in particular 1.5 mm. For example, two holes are vertical and two holes are horizontal successively, when the wire or needle is in the filter. The degrees of dirtiness of the vertical and horizontal holes provide indication for the status of dirtiness of the filter.

In a further advantageous embodiment of the inventive filter the first filter element is for an air circulation filter or an exhaust air filter.

The objects of the present invention are further achieved by a kitchen hob according to claim 15.

According to the present invention the kitchen hood comprises a filter and/or at least one filter element mentioned above.

Preferably, the filter is integrated within the kitchen hood by lateral bars, by the frame in which the filter elements are fixed by the bar and the spacer elements, by V-shaped profile parts insertable in the frame and/or by a chain connections between the filter elements.

All described embodiments of the invention have the advantage, that such filter and/or filter element according to the present invention have a particular more light weight and has lower manufacturing costs.

The present invention will be described in further detail with reference to the drawings from which further features, embodiments and advantages may be taken, and in which
- FIG 1: illustrates a schematic front view of a filter according to a preferred embodiment of the present invention,
- FIG 2: illustrates schematic perspective views of filter elements according to the preferred embodiment of the present invention,
- FIG 3: illustrates a schematic perspective view of three adjacent filter elements according to the preferred embodiment of the present invention,
- FIG 4: illustrates a schematic perspective view of a piece of a porous material according to the preferred embodiment of the present invention, and
- FIG 5: illustrates a further schematic perspective view of the adjacent filter elements according to the preferred embodiment of the present invention.

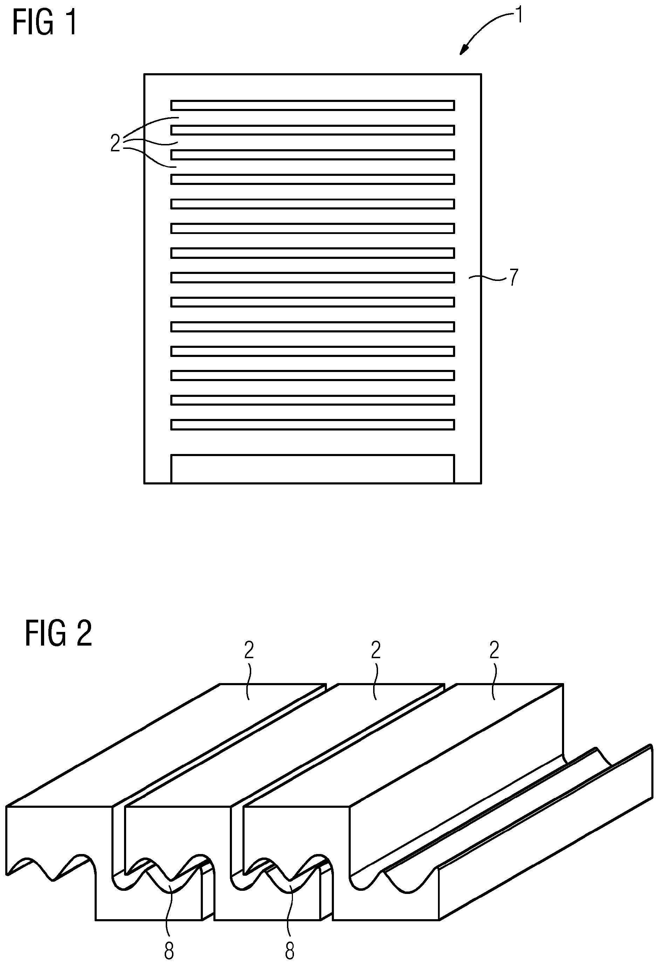

FIG 1 illustrates a schematic front view of a filter 1 according to a first embodiment of the present invention.

The filter 1 comprises a plurality of filter elements 2 and a rectangular frame 7. The elements 2 are elongated profile parts. The filter elements 2 are arranged side by side and parallel to each other. Adjacent filter elements 2 are spaced from each other. An air flow channel 8 is formed between two adjacent filter elements 2. The filter elements 2 are formed as profile parts. Preferably, the filter elements 2 are made of plastics. For example, the filter elements 2 are made of acrylonitrile butadiene styrene (ABS), polypropylene (PP), polycarbonate (PC), glass and glass ceramic. The composed filter elements 2 form a rectangular sheet. Preferably, the filter elements 2 are extruded profile parts having the same cross-section. The frame 7 encloses the filter elements 2.

FIG 2 illustrates schematic perspective views of the filter elements 2 according to the preferred embodiment of the present invention.

The filter elements 2 form the filter 1 and are arranged side-by-side and parallel to each other. Preferably, the filter elements 2 are identical. The filter elements 2 are elongated profile parts. Substantially, the filter element 2 has a Z-shaped cross-section. The filter elements 2 are spaced from each other. The opposite surfaces of the adjacent filter elements 2 are substantially complementary to each other. Said opposite surfaces of the adjacent filter elements 2 are spaced from each other in a predetermined distance, so that the air flow channel 8 is formed between said opposite surfaces of the adjacent filter elements 2.

In this example, the distance between the opposite surfaces of the adjacent filter elements 2 is about 3 mm. The shortest path through said air flow channel 8 extends perpendicular to the longitudinal axis of the filter elements 2. The opposite surfaces of the adjacent filter elements 2 have a corrugated or wave-like structure, so that the shortest path through the air flow channel 8 has also a wave-like course. The corrugation in the opposite surfaces of the adjacent filter elements 2 extends parallel to the longitudinal axis of the filter element 2. In other words, the wave front of the wave-like structure of the opposite surfaces of the adjacent filter elements 2 extends parallel to the longitudinal axis of the filter element 2. The wave-like structure increases the area of the opposite surfaces.

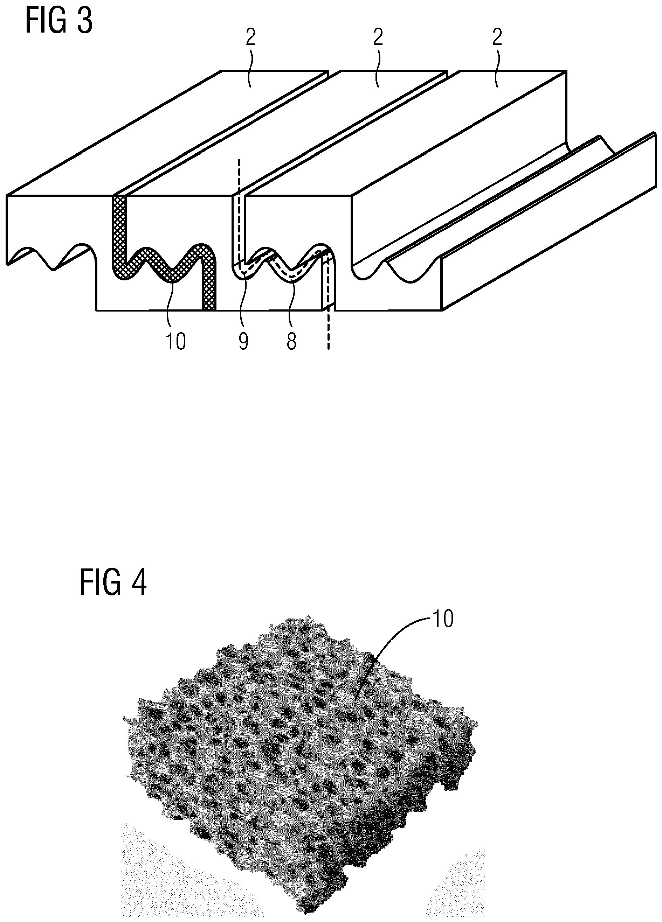

Optionally, the opposite surfaces of the adjacent filter elements 2 are coated, so that said surfaces are wettable with enhanced hydrophilic characteristics, e.g. by TiO₂ based coating. FIG 3 illustrates a schematic perspective view of three adjacent filter elements 2 according to the preferred embodiment of the present invention.

An air stream 9 is formed along the shortest path through the air flow channel 8 between the opposite surfaces of the adjacent filter elements 2. The air stream 9 passes a labyrinth between said opposite surfaces of the adjacent filter elements 2. Preferably, the distance between the opposite surfaces of the adjacent filter elements 2 is about 3 mm. In this example, the radius of curvature of the wave-like structure is about 1 mm.

The wave-like structure of the opposite surfaces generates curls of the air stream 9 in sub-cavities of said wave-like structure, so that grease is separated from the air stream 9. The wave-like structure decelerates the air stream 9, so that the curls occur in the sub-cavities of said wave-like structure. The grease is deposited onto the surfaces of said sub-cavities as an oily film. The flow resistance of the air flow channel 8 is not substantially impaired by this effect. There is no erosive effect, so that no holes or micro cavities in the plastic material are generated. Preferably, the wave-like structure requires a smooth surface.

The air flow channel 8 is filled with a porous material 10. For example, said porous material 10 is foamed ceramics. Optionally, the porous material may be coated with an adsorbent, wherein preferably said adsorbent is selected from the group comprising activated carbon.

In general, the filter elements 2 are made of at least one non-metal material. In particular, the filter elements 2 are made of a plastic material, wherein preferably said plastic material is selected from the group comprising acrylonitrile butadiene styrene (ABS), polypropylene (PP), polycarbonate (PC), glass and glass ceramic plastics. In particular, the filter elements 2 are made of one or more materials having a heat resistance of more than about 105°C.

FIG 4 illustrates a schematic perspective view of a piece of a porous material 10 according to the preferred embodiment of the present invention. Preferably, the porous material 10 is made of foamed ceramics. FIG 4 clarifies the structure of said porous material 10. For example, the porous material is coated with an adsorbent, wherein preferably said adsorbent is selected from the group comprising activated carbon. In particular, the diameter of the pores may be 3 mm ± 1 mm.

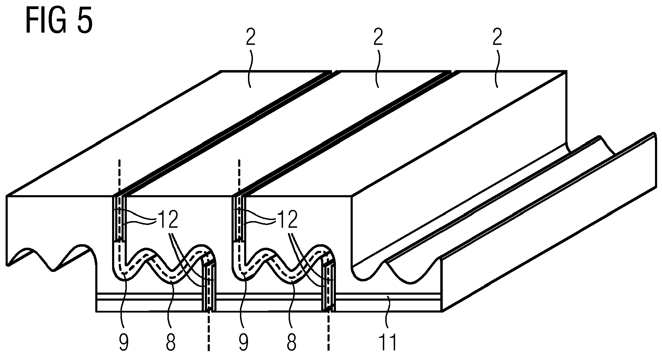

FIG 5 illustrates a further schematic perspective view of the adjacent filter elements 2 according to the preferred embodiment of the present invention.

In this example, the filter elements 2 are assembled by two elongated bars 11 extending perpendicular to the longitudinal axis of said filter element 2 and within the plane of the filter 1. Further, the bars 11 are arranged close to the profile terminals of the filter elements 2. Preferably, the bars 11 are screwed. Moreover, suitable spacer elements 12 are arranged between the opposite surfaces of adjacent filter elements 2 and penetrated by the bars 11. This is also a suitable approach, if the bar 11 would be positioned in the central line of the air flow channel 8 between two profiles. Preferably, the filter elements 2 are rigid.

Alternatively, the filter 1 could be assembled as a sort of caterpillar, which could be rolled for washing. The filter 1 can be positioned in the kitchen hood as a single device, i.e. as a unique long filter, positioned in a sort of bed, which could be opened down under the kitchen hood. The filter elements 2 may be connected between them like chain units laterally.

An external cover may be attached onto the lower border of the kitchen hood. The mobile frame 7 may be fixed on one side beneath the kitchen hood by hinges. A lock on the other side may keep the filter 1 in working position and enables easily inspections and extraction.

The capture of grease aerosols and oily vapours is the basic scope of the filter function in the kitchen hood. The low drop of pressure and the sufficient filter operation are the most important aspects for the filter 1 in the kitchen hood. The present invention uses relative simple profile parts as the filter elements 2 with porous material 10 in between. By the filter elements 2 made of plastic materials and the porous material 10 it is possible to obtain sufficient filter efficiency with a low drop of pressure, which is practically constant between two subsequent washing or cleaning operations.

Further, the filter may comprise a filter dirty status indicator formed as a screw, which is vertically insertable into and removable from the filter element. In particular, the screw is vertically insertable into the air flow channel between the filter elements. The screw indicates the degree of contamination of the filter element.

Alternatively, the filter dirty status indicator may be formed as a wire or needle horizontally insertable into and removable from the air flow channel between two filter elements. The wire or needle indicates the degree of contamination of the filter element. Preferably, the wire or needle has a diameter between 4 mm and 6 mm, in particular 5 mm, and a length between 120 mm and 150 mm. The wire or needle may include a number of equidistance holes extending perpendicular to the longitudinal axis of said wire or needle. At least two holes extend perpendicular to each other. Preferably, the holes have the same diameter, which is between 1 mm and 2 mm, in particular 1.5 mm. For example, two holes are vertical and two holes are horizontal successively, when the wire or needle is in the filter. The degrees of dirtiness of the vertical and horizontal holes provide indication for the status of dirtiness of the filter.

According to a further embodiment, a filter saturation indicator may be integrated within the filter 1. The saturated state of the filter 1 may be determined by the time measurement between two subsequent cleaning processes. Further, the saturated state of the filter 1 may be determined by sensors for detecting the intensity of the oil vapours concentration arriving and leaving the filter 1, wherein preferably the operation time of the kitchen is detected and considered. Moreover, an optical sensor is arranged in a central air flow channel 8 of the filter 1 in order to inspect the dirty status of said filter 1. At last, the drop of the pressure in the filter 1 is detected by a sensor.

The inventive filter 1 allows a concept for a coloured filter design. The filter elements 2 made of plastic may be provided in arbitrary colours. Some filter elements 2 may be made of a transparent plastic material, which allows an illumination by a light source in the inner cavity of the kitchen hood. Further, the filter elements 2 made of transparent plastic material may be used as an indicator of the filter clean status. Moreover, the filter clean status indicator may be introduced into the filter elements 2. For example, said filter clean status indicator may be a vertical transparent screw or horizontal long needle with small holes. For exclusive kitchens, such filter elements 2 may be made of transparent or coloured glass, black and/or white glass ceramic, wherein the filter elements 2 may be made of smooth and/or porous material.

The features of the present invention disclosed in the specification, the claims, and/or the figures may both separately and in any combination thereof be material for realizing the invention in various forms thereof.

### List of reference numerals

- 1: filter
- 2: filter element
- 7: frame
- 8: air flow channel
- 9: air stream
- 10: porous material
- 11: bar, screw
- 12: spacer element

## Claims

1. A filter (1) for a kitchen hood, wherein
- said filter (1) comprises a plurality of filter elements (2),
- the filter elements (2) are formed as elongated profile parts having the same cross-section,
- the filter elements (2) are arranged side by side and parallel to each other,
- the shapes of opposite surfaces of two adjacent filter elements (2) are substantially complementary to each other,
- the opposite surfaces of the adjacent filter elements (2) are spaced from each other at a predetermined distance, and
- an air flow channel (8) is formed in each intermediate space between two adjacent filter elements (2), so that
- said air flow channel (8) extends perpendicular to the longitudinal axes of the filter elements (2),
**characterised in that**
the shapes of opposite surfaces of two adjacent filter elements (2) have a corrugated and wave-like structure, so that the shortest path through the air flow channel (8) has a wave-like structure, and wherein the intermediate spaces between the adjacent filter elements (2) are filled with at least one porous material (10).

2. The filter according to claim 1,
**characterised in that**
the wave front of the wave-like structure extends parallel to the longitudinal axes of the filter elements (2).

3. The filter according to any one of the preceding claims, **characterised in that**
the filter elements (2) are made of at least one non-metal material, in particular a plastic material selected from the group comprising acrylonitrile butadiene styrene (ABS), polypropylene (PP), polycarbonate (PC), glass and glass ceramic plastics, wherein preferably the filter elements (2) are made of one or more materials having a heat resistance of more than about 105°C.

4. The filter according to any one of the preceding claims, **characterised in that**
the filter (1) comprises at least one frame (7) enclosing the filter elements (2) or a part of said filter elements (2), wherein preferably the frame (7) has a rectangular or square shape.

5. The filter according to any one of the preceding claims, **characterised in that**
the distance between the opposite surfaces of the adjacent filter elements (2) is between 1 mm and 5 mm, preferably between 2 mm and 4 mm, in particular about 3 mm.

6. The filter according to any one of the preceding claims, **characterised in that**
said porous material (10) is foamed ceramics.

7. The filter according to claim 6,
**characterised in that**
the porous material (10) is coated with an adsorbent, wherein preferably said adsorbent is selected from the group comprising activated carbon.

8. The filter according to any one of the preceding claims, **characterised in that**
the filter (1) comprises at least one bar (11) or screw for connecting the filter elements (2), wherein said bar (11) or screw penetrates horizontally the filter elements (2) to be connected, and wherein preferably said bar (11) or screw extends perpendicular to the longitudinal axis of the filter elements (2).

9. The filter according to claim 8,
**characterised in that**
the filter (1) comprises a plurality of spacer elements (12) arranged or arrangeable between two adjacent filter elements (2) and penetrated by the bar (11) or screw, respectively, in order to define the distances between the opposite surfaces of the adjacent filter elements (2), wherein preferably said bar (11) or screw extends perpendicular to the longitudinal axis of the filter elements (2).

10. The filter according to any one of the preceding claims, **characterised in that**
the filter (1) comprises at least one filter dirty status indicator formed as a screw vertically insertable into and removable from the filter element (2), in particular the air flow channel (8), wherein said screw indicates the degree of contamination of the filter element (2).

11. The filter according to any one of the preceding claims, **characterised in that**
the filter (1) comprises at least one filter dirty status indicator formed as a wire or needle horizontally insertable into and removable from the air flow channel (8) between two filter elements (2), wherein said wire or needle indicates the degree of contamination of the filter element (2), and wherein preferably the wire or needle has a diameter between 4 mm and 6 mm, in particular 5 mm, and a length between 120 mm and 150 mm.

12. The filter according to claim 11,
**characterised in that**
the wire or needle includes a number of equidistance holes extending perpendicular to the longitudinal axis of said wire or needle, wherein at least two holes extend perpendicular to each other, and wherein preferably the holes have the same diameter, which is between 1 mm and 2 mm, in particular 1.5 mm.

13. Kitchen hood comprising a filter (1) according to any one of claims 1 to 12, wherein preferably the filter (1) is integrated by lateral bars, by the frame (7) in which the filter elements (2) are fixed by the bar (11) and the spacer elements (12), by V-shaped profile parts insertable in the frame (7) and/or by a chain connections between the filter elements (2).

## Patentansprüche

1. Filter (1) für eine Küchenabzugshaube, wobei
- der Filter (1) eine Mehrzahl von Filterelementen (2) umfasst,
- die Filterelemente (2) als längliche Profilteile mit demselben Querschnitt ausgebildet sind,
- die Filterelemente (2) nebeneinander und parallel zueinander angeordnet sind,
- die Formen von gegenüberliegenden Flächen von zwei angrenzenden Filterelementen (2) im Wesentlichen komplementär zueinander sind,
- die gegenüberliegenden Flächen der angrenzenden Filterelemente (2) in einem vorbestimmten Abstand voneinander beabstandet sind, und
- ein Luftströmungskanal (8) in jedem Zwischenraum zwischen zwei angrenzenden Filterelementen (2) ausgebildet ist, so dass
- sich der Luftströmungskanal (8) senkrecht zu den Längsachsen der Filterelemente (2) erstreckt,
**dadurch gekennzeichnet, dass**
die Formen von gegenüberliegenden Flächen von zwei angrenzenden Filterelementen (2) eine gewellte und wellenartige Struktur aufweisen, so dass der kürzeste Weg durch den Luftströmungskanal (8) eine wellenartige Struktur aufweist, und wobei die Zwischenräume zwischen den angrenzenden Filterelementen (2) mit mindestens einem porösen Material (10) gefüllt sind.

2. Filter nach Anspruch 1,
**dadurch gekennzeichnet, dass**
sich die Wellenfront der wellenartigen Struktur parallel zu den Längsachsen der Filterelemente (2) erstreckt.

3. Filter nach einem der vorhergehenden Ansprüche, **dadurch gekennzeichnet, dass**
die Filterelemente (2) aus mindestens einem nichtmetallischen Material, insbesondere einem Kunststoffmaterial bestehen, das ausgewählt ist aus der Gruppe umfassend Acrylonitril-Butadien-Styrol (ABS), Polypropylen (PP), Polycarbonat (PC), Glas und Glaskeramikkunststoffe, wobei vorzugsweise die Filterelemente (2) aus einem oder mehreren Materialien bestehen, die eine Wärmebeständigkeit von mehr als ca. 105 °C aufweisen.

4. Filter nach einem der vorhergehenden Ansprüche, **dadurch gekennzeichnet, dass**
der Filter (1) mindestens einen die Filterelemente (2) oder einen Teil der Filterelemente (2) umschließenden Rahmen (7) umfasst, wobei der Rahmen (7) vorzugsweise eine rechteckige oder quadratische Form aufweist.

5. Filter nach einem der vorhergehenden Ansprüche, **dadurch gekennzeichnet, dass**
der Abstand zwischen den gegenüberliegenden Flächen der angrenzenden Filterelemente (2) zwischen 1 mm und 5 mm, vorzugsweise zwischen 2 mm und 4 mm, insbesondere ca. 3 mm beträgt.

6. Filter nach einem der vorhergehenden Ansprüche, **dadurch gekennzeichnet, dass**
das poröse Material (10) Schaumkeramik ist.

7. Filter nach Anspruch 6,
**dadurch gekennzeichnet, dass**
das poröse Material (10) mit einem Adsorbens beschichtet ist, wobei das Adsorbens vorzugsweise ausgewählt ist aus der Gruppe umfassend Aktivkohle.

8. Filter nach einem der vorhergehenden Ansprüche, **dadurch gekennzeichnet, dass**
der Filter (1) mindestens eine Stange (11) oder Schraube zum Verbinden der Filterelemente (2) umfasst, wobei die Stange (11) oder Schraube die zu verbindenden Filterelemente (2) horizontal durchdringt, und wobei sich die Stange (11) oder Schraube vorzugsweise senkrecht zu der Längsachse der Filterelemente (2) erstreckt.

9. Filter nach Anspruch 8,
**dadurch gekennzeichnet, dass**
der Filter (1) eine Mehrzahl von Abstandselementen (12) umfasst, die zwischen zwei angrenzenden Filterelementen (2) angeordnet oder anordenbar sind und durch die Stange (11) bzw. Schraube durchdrungen werden, um die Abstände zwischen den gegenüberliegenden Flächen der angrenzenden Filterelemente (2) zu definieren, wobei sich die Stange (11) oder Schraube vorzugsweise senkrecht zu der Längsachse der Filterelemente (2) erstreckt.

10. Filter nach einem der vorhergehenden Ansprüche, **dadurch gekennzeichnet, dass**
der Filter (1) mindestens eine Filterverschmutzungszustandsanzeige umfasst, die als eine Schraube ausgebildet ist, die vertikal in die Filterelemente (2), insbesondere den Luftströmungskanal (8), einsetzbar und daraus entfernbar ist, wobei die Schraube den Grad an Verunreinigung des Filterelements (2) anzeigt.

11. Filter nach einem der vorhergehenden Ansprüche, **dadurch gekennzeichnet, dass**
der Filter (1) mindestens eine Filterverschmutzungszustandsanzeige umfasst, die als ein Draht oder eine Nadel ausgebildet ist, der bzw. die horizontal in den Luftströmungskanal (8) zwischen zwei Filterelementen (2) einsetzbar und daraus entfernbar ist, wobei der Draht oder die Nadel den Grad an Verunreinigung des Filterelements (2) anzeigt, und wobei der Draht oder die Nadel vorzugsweise einen Durchmesser zwischen 4 mm und 6 mm, insbesondere 5 mm, und eine Länge zwischen 120 mm und 150 mm aufweist.

12. Filter nach Anspruch 11,
**dadurch gekennzeichnet, dass**
der Draht oder die Nadel eine Anzahl von abstandsgleichen Öffnungen umfasst, die sich senkrecht zu der Längsachse des Drahts oder der Nadel erstrecken, wobei sich mindestens zwei Öffnungen senkrecht zueinander erstrecken, und wobei die Öffnungen vorzugsweise denselben Durchmesser aufweisen, der zwischen 1 mm und 2 mm, insbesondere 1,5 mm, beträgt.

13. Küchenabzugshaube, umfassend einen Filter (1) nach einem der Ansprüche 1 bis 12, wobei der Filter (1) vorzugsweise durch laterale Stangen, durch den Rahmen (7) in dem die Filterelemente (2) durch die Stange (11) und die Abstandselemente (12) fixiert sind, durch V-förmige Profilteile, die in den Rahmen (7) einsetzbar sind, und/oder durch eine Kettenverbindungen zwischen den Filterelementen (2) integriert ist.

## Revendications

1. Filtre (1) pour hotte de cuisine, dans lequel
- ledit filtre (1) comprend une pluralité d'éléments filtrants (2),
- les éléments filtrants (2) sont sous forme de parties à profil allongé ayant la même section transversale,
- les éléments filtrants (2) sont agencés côte à côte et parallèles les uns aux autres,
- les formes de surfaces opposées de deux éléments filtrants adjacents (2) sont sensiblement complémentaires l'une à l'autre,
- les surfaces opposées des éléments filtrants adjacents (2) sont espacées l'une de l'autre à une distance prédéterminée, et
- un canal d'écoulement d'air (8) est formé dans chaque espace intermédiaire entre deux éléments filtrants adjacents (2), pour que
- ledit canal d'écoulement d'air (8) s'étende perpendiculairement aux axes longitudinaux des éléments filtrants (2),
**caractérisé en ce que**
les formes de surfaces opposées de deux éléments filtrants adjacents (2) ont une structure cannelée et de type ondulé, pour que le chemin le plus court à travers le canal d'écoulement d'air (8) ait une structure de type ondulé, et dans lequel les espaces intermédiaires entre les éléments filtrants adjacents (2) sont remplis avec au moins un matériau poreux (10).

2. Filtre selon la revendication 1,
**caractérisé en ce que**
le front d'onde de la structure de type ondulé s'étend parallèlement aux axes longitudinaux des éléments filtrants (2) .

3. Filtre selon l'une quelconque des revendications précédentes,
**caractérisé en ce que**
les éléments filtrants (2) sont faits d'au moins un matériau non métallique, en particulier d'un matériau plastique sélectionné parmi le groupe comprenant des plastiques acrylonitrile butadiène styrène (ABS), polypropylène (PP), polycarbonate (PC), vitreux et vitrocéramiques, dans lequel de préférence les éléments filtrants (2) sont faits d'un ou de plusieurs matériaux ayant une résistance à la chaleur de plus d'environ 105°C.

4. Filtre selon l'une quelconque des revendications précédentes,
**caractérisé en ce que**
le filtre (1) comprend au moins un cadre (7) entourant les éléments filtrants (2) ou une partie desdits éléments filtrants (2), dans lequel, de préférence, le cadre (7) a une forme rectangulaire ou carrée.

5. Filtre selon l'une quelconque des revendications précédentes,
**caractérisé en ce que**
la distance entre les surfaces opposées des éléments filtrants adjacents (2) est entre 1 mm et 5 mm, de préférence entre 2 mm et 4 mm, en particulier d'environ 3 mm.

6. Filtre selon l'une quelconque des revendications précédentes,
**caractérisé en ce que**
ledit matériau poreux (10) est de la céramique mousse.

7. Filtre selon la revendication 6,
**caractérisé en ce que**
le matériau poreux (10) est enduit avec un adsorbant, dans lequel, de préférence, ledit adsorbant est sélectionné parmi le groupe comprenant du charbon actif.

8. Filtre selon l'une quelconque des revendications précédentes,
**caractérisé en ce que**
le filtre (1) comprend au moins une barre (11) ou vis pour raccorder les éléments filtrants (2), dans lequel ladite barre (11) ou vis pénètre horizontalement dans les éléments filtrants (2) destinés à être raccordés, et dans lequel, de préférence, ladite barre (11) ou vis s'étend perpendiculairement à l'axe longitudinal des éléments filtrants (2) .

9. Filtre selon la revendication 8,
**caractérisé en ce que**
le filtre (1) comprend une pluralité d'éléments d'espacement (12) agencés ou agençables entre deux éléments filtrants adjacents (2) et dans lesquels pénètre la barre (11) ou vis, respectivement, afin de définir les distances entre les surfaces opposées des éléments filtrants adjacents (2), dans lequel, de préférence, ladite barre (11) ou vis s'étend perpendiculairement à l'axe longitudinal des éléments filtrants (2).

10. Filtre selon l'une quelconque des revendications précédentes,
**caractérisé en ce que**
le filtre (1) comprend au moins un indicateur d'état sale de filtre sous forme de vis verticalement insérable dans, et amovible à partir de, l'élément filtrant (2), en particulier dans le, et à partir du, canal d'écoulement d'air (8), dans lequel ladite vis indique le degré de contamination de l'élément filtrant (2).

11. Filtre selon l'une quelconque des revendications précédentes,
**caractérisé en ce que**
le filtre (1) comprend au moins un indicateur d'état sale de filtre sous forme de fil ou d'aiguille horizontalement insérable dans le, et amovible à partir du, canal d'écoulement d'air (8) entre deux éléments filtrants (2), dans lequel ledit fil ou ladite aiguille indique le degré de contamination de l'élément filtrant (2), et dans lequel de préférence le fil ou l'aiguille a un diamètre entre 4 mm et 6 mm, en particulier de 5 mm, et une longueur entre 120 mm et 150 mm.

12. Filtre selon la revendication 11,
**caractérisé en ce que**
le fil ou l'aiguille inclut un nombre de trous à équidistance s'étendant perpendiculairement à l'axe longitudinal dudit fil ou de ladite aiguille, dans lequel au moins deux trous s'étendent perpendiculairement l'un à l'autre, et dans lequel, de préférence, les trous ont le même diamètre, qui est entre 1 mm et 2 mm, en particulier de 1,5 mm.

13. Hotte de cuisine comprenant un filtre (1) selon l'une quelconque des revendications 1 à 12, dans laquelle, de préférence, le filtre (1) est intégré par des barres latérales, par le cadre (7) dans lequel les éléments filtrants (2) sont fixés par la barre (11) et les éléments d'espacement (12), par des parties à profil en forme de V insérables dans le cadre (7) et/ou par un raccordement en chaîne entre les éléments filtrants (2).
